(19) Europäisches Patentamt
European Patent Office
Office européen des brevets

(11) EP 4 801 152 A1

(12) **EUROPEAN PATENT APPLICATION**
published in accordance with Art. 153(4) EPC

(43) Date of publication:
**02.09.2026 Bulletin 2026/36**

(21) Application number: **24906128.4**

(22) Date of filing: **05.12.2024**

(51) International Patent Classification (IPC):
***H04W 72/0446*** *(2023.01)* ***H04W 72/04*** *(2023.01)*

(52) Cooperative Patent Classification (CPC):
**H04W 72/04; H04W 72/0446; H04W 72/0453; H04W 72/23**

(86) International application number:
**PCT/CN2024/137141**

(87) International publication number:
**WO 2025/130644 (26.06.2025 Gazette 2025/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.12.2023 CN 202311766345**

(71) Applicant: **Huawei Technologies Co., Ltd.**
**Shenzhen, Guangdong 518129 (CN)**

(72) Inventors:
- **FAN, Bo**
  **Shenzhen, Guangdong 518129 (CN)**
- **DENG, Xuefei**
  **Shenzhen, Guangdong 518129 (CN)**

(74) Representative: **Isarpatent**
**Patent- und Rechtsanwälte Part G mbB**
**Friedrichstrasse 31**
**80801 München (DE)**

(54) **COMMUNICATION METHOD AND APPARATUS**

(57) This application discloses a communication method and apparatus. The method includes: A terminal device receives a configuration message, where the configuration message includes a configuration parameter of a first signal; receives the first signal based on the configuration parameter of the first signal; and if the first signal is successfully received, receives a PDCCH associated with the first signal. In this application, the first signal is introduced, so that the terminal device can receive the PDCCH as required. In this way, terminal device avoids traversing all possible time-frequency resource locations for PDCCH blind detection, so that complexity of PDCCH reception is reduced for the terminal device.

Network device
Terminal device
S401: The network device sends a configuration message, and the terminal device receives the configuration message
S402: The network device sends a first signal and a PDCCH associated with the first signal
S403: The terminal device receives the first signal based on a configuration parameter of the first signal
Whether the first signal is successfully received
Failed
Successful
S404: Receive the PDCCH associated with the first signal
S405: Skip receiving the PDCCH associated with the first signal

FIG. 4

EP 4 801 152 A1

## Description

### CROSS-REFERENCE TO RELATED APPLICATIONS

This application claims priority to Chinese Patent Application No. 202311766345.3, filed with the China National Intellectual Property Administration on December 20, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A network device may configure a plurality of time-frequency resource locations for a terminal device, to send a physical downlink control channel (physical downlink control channel, PDCCH) to the terminal device. When actually sending the PDCCH, the network device may send the PDCCH only at a part of time-frequency resource locations.

If the terminal device does not know a specific time-frequency resource location at which the PDCCH sent by the network device to the terminal device is located, the terminal device attempts to receive the PDCCH at all time-frequency resource locations at which the PDCCH may exist (that is, performs PDCCH blind detection). For example, the terminal device performs processing such as descrambling, de-rate matching, decoding, and cyclic redundancy check (cyclic redundancy check, CRC) check on a signal transmitted at each time-frequency resource location at which the PDCCH may exist. If the decoding is successful, it indicates that the PDCCH for the terminal device actually exists at the time-frequency resource location. If the decoding fails, it indicates that the PDCCH for the terminal device does not exist at the time-frequency resource location.

It can be learned that a manner in which the terminal device receives the PDCCH by traversing all possible time-frequency resource locations is highly complex.

### SUMMARY

This application provides a communication method and apparatus, to reduce complexity of PDCCH reception, and enable a terminal device to receive a PDCCH as required.

According to a first aspect, a communication method is provided. The method may be applied to a terminal device. Unless otherwise specified, the "terminal device" in this application may be the terminal device itself, may be a component (for example, a processor, a chip, or a chip system) in the terminal device, or may be a logical module or software that can implement all or a part of functions of the terminal device. The method includes: receiving a configuration message, where the configuration message includes a configuration parameter of a first signal; receiving the first signal based on the configuration parameter of the first signal; and if the first signal is successfully received, receiving a PDCCH associated with the first signal.

Optionally, that the configuration message includes the configuration parameter of the first signal may be further described as follows: The configuration message includes the configuration parameter, and the configuration parameter is used to configure the first signal; the configuration message includes the configuration parameter, and the configuration parameter is used to configure the first signal to be associated with the PDCCH; or the like.

In this embodiment of this application, the first signal is introduced, so that the terminal device receives the PDCCH only when successfully receiving the first signal. In addition, the terminal device receives the PDCCH associated with the first signal, so that the terminal device can receive the PDCCH as required. In this way, the terminal device avoids traversing all possible time-frequency resource locations for PDCCH blind detection, so that complexity of PDCCH reception is reduced for the terminal device.

In a possible design, if the first signal corresponds to the terminal device, it is determined that the first signal is successfully received.

In this design manner, only when receiving a first signal corresponding to the terminal device itself, the terminal device can continue to receive a PDCCH corresponding to the first signal, and the terminal device receives, based on the first signal, a PDCCH corresponding to the terminal device itself.

In a possible design, the method further includes: if the first signal fails to be received, skipping receiving the PDCCH associated with the first signal, or when PDCCH blind detection is performed, skipping the PDCCH associated with the first signal.

In this design manner, when receiving a first signal that does not correspond to the terminal device itself, the

terminal device may not receive a PDCCH corresponding to the first signal, and the terminal device may not receive, based on the first signal, a PDCCH corresponding to another terminal device.

In a possible design, if the first signal does not correspond to the terminal device, it is determined that the first signal fails to be received.

In a possible design, after a first signal sent by a network device is received, correlation detection may be performed on the received first signal and the first signal that corresponds to the terminal device (for example, a first signal stored by the terminal device), and whether the received first signal is the first signal that corresponds to the terminal device is determined based on a correlation detection result. For example, if correlation detection succeeds (for example, a correlation value exceeds a threshold), it indicates that the first signal received by the terminal device is the first signal that corresponds to the terminal device, and the terminal device successfully receives the first signal. For example, if correlation detection fails (for example, a correlation value does not exceed a threshold), it indicates that the first signal received by the terminal device is not the first signal that corresponds to the terminal device, and the terminal device fails to receive the first signal.

Optionally, the first signal may be a user-level signal. Specifically, a determined first signal is configured for each user, and each terminal device may store a first signal of a user that corresponds to the terminal device. First signals configured for different users may be completely the same, or may be completely different, or may be partially the same or different. This is not limited.

In a possible design, the configuration parameter of the first signal includes one or more of the following:

a first parameter, where the first parameter is used to determine to enable or disable the first signal; and the parameter can ensure that the terminal device receives the PDCCH based on the first signal when the first signal is enabled, to improve reliability of the solution;

a type of the first signal, where the type of the first signal includes one or more of a first signal associated with a control resource set, a first signal associated with a search space, a first signal associated with a monitoring occasion, and a first signal associated with a PDCCH candidate; and the parameter can ensure that the terminal device receives the PDCCH based on the type of the first signal configured for a network, to improve reliability of the solution; and

an association relationship between the first signal and one or more of the following resources: a control resource set, a search space, a monitoring occasion, and a PDCCH candidate; and the parameter may be used to assist the terminal device in determining a resource associated with the first signal, to receive the PDCCH on the resource associated with the first signal.

It may be understood that when the configuration parameter of the first signal includes both the type of the first signal and an association relationship between the first signal and a resource, the type of the first signal corresponds to (or matches) the association relationship between the first signal and a resource. For example, if the type of the first signal includes a control resource set, the association relationship between the first signal and a resource includes an association relationship between the first signal and a control resource set.

It may be understood that the foregoing several types are merely examples rather than limitations, and there may actually be another possibility.

In this design manner, it can be ensured that behavior of the network device corresponds to behavior of the terminal device, and reliability of communication between the network device and the terminal device is improved.

In a possible design, receiving the first signal based on the configuration parameter of the first signal may include: receiving the first signal based on the first parameter. For example, if the first parameter indicates to enable the first signal, whether the network device sends the first signal (or receives the first signal) is detected. For example, if the first parameter indicates to disable the first signal, whether the network device sends the first signal (or receives the first signal) is not detected.

In a possible design, receiving the first signal based on the configuration parameter of the first signal may include: receiving the first signal based on the type of the first signal. For example, whether the network device sends the first signal of the type to the terminal device (or receives the first signal of the type).

In a possible design, the association relationship between the first signal and a control resource set includes a control resource set associated with the first signal, or a first signal associated with a control resource set. It may be understood that one first signal may be associated with one or more control resource sets, or one control resource set may be associated with one or more first signals. This is not limited.

In a possible design, the association relationship between the first signal and a search space includes a search space associated with the first signal, or a first signal associated with a search space. It may be understood that one first signal may be associated with one or more search spaces, or one search space may be associated with one or more first signals. This is not limited.

In a possible design, the association relationship between the first signal and a monitoring occasion includes a monitoring occasion associated with the first signal, or a first signal associated with a monitoring occasion. It may be

understood that one first signal may be associated with one or more monitoring occasions, or one monitoring occasion may be associated with one or more first signals. This is not limited.

In a possible design, the association relationship between the first signal and a PDCCH candidate includes a PDCCH candidate associated with the first signal, or a first signal associated with a PDCCH candidate. It may be understood that one first signal may be associated with one or PDCCH candidates, or one PDCCH candidate may be associated with one or more first signals. This is not limited.

In a possible design, the PDCCH associated with the first signal includes one or more of the following: a PDCCH that corresponds to the control resource set associated with the first signal; a PDCCH that corresponds to the search space associated with the first signal; a PDCCH that corresponds to the monitoring occasion associated with the first signal; and a PDCCH that corresponds to the PDCCH candidate associated with the first signal.

In a possible design, receiving the PDCCH associated with the first signal includes: receiving the PDCCH associated with the first signal based on the configuration parameter of the first signal. For example, the configuration parameter carries the association relationship between the first signal and the one or more resources, and the PDCCH is received, based on the association relationship between the first signal and the one or more resources in the configuration parameter, on the one or more resources associated with the first signal.

In this design manner, the terminal device may determine, based on the configuration parameter, which resources on which the PDCCH is received, to improve reliability of the solution.

In a possible design, before the configuration message is received, capability information of the terminal device may be further sent.

The capability information of the terminal device indicates one or more of the following:

whether the terminal device supports PDCCH reception based on the first signal, or whether the terminal device supports the first signal;
a type of the first signal supported by the terminal device;
a quantity of types of the first signal supported by the terminal device;
whether the terminal device supports the first signal associated with the control resource set;
whether the terminal device supports the first signal associated with the search space;
whether the terminal device supports the first signal associated with the monitoring occasion;
whether the terminal device supports the first signal associated with the PDCCH candidate; and
a quantity of first signals supported by the terminal device.

It may be understood that the foregoing several items are merely examples rather than limitations, and may actually further include another possibility.

In this design manner, the terminal device may report the capability information of the terminal device to the network device, so that the network device configures the configuration parameter of the first signal based on the capability information of the terminal device, to further improve communication reliability.

According to a second aspect, a communication method is provided. The method may be applied to a network device. Unless otherwise specified, the "network device" in this application may be the terminal device itself, may be a component (for example, a processor, a chip, or a chip system) in the network device, or may be a logical module or software that can implement all or a part of functions of the terminal device. The method includes: sending a configuration message, where the configuration message includes a configuration parameter of a first signal; and sending the first signal and a PDCCH associated with the first signal.

In a possible design, the configuration parameter of the first signal includes one or more of the following:

a first parameter, where the first parameter is used to determine to enable or disable the first signal;
a type of the first signal, where the type of the first signal includes one or more of a first signal associated with a control resource set, a first signal associated with a search space, a first signal associated with a monitoring occasion, and a first signal associated with a PDCCH candidate; and
an association relationship between the first signal and one or more of the following resources: a control resource set, a search space, a monitoring occasion, and a PDCCH candidate.

In a possible design, the association relationship between the first signal and a control resource set includes a control resource set associated with the first signal, or a first signal associated with a control resource set; or

the association relationship between the first signal and a search space includes a search space associated with the first signal, or a first signal associated with a search space; or
the association relationship between the first signal and a monitoring occasion includes a monitoring occasion associated with the first signal, or a first signal associated with a monitoring occasion; or

the association relationship between the first signal and a PDCCH candidate includes a PDCCH candidate associated with the first signal, or a first signal associated with a PDCCH candidate.

In a possible design, the PDCCH associated with the first signal includes one or more of the following:

a PDCCH that corresponds to the control resource set associated with the first signal;
a PDCCH that corresponds to the search space associated with the first signal;
a PDCCH that corresponds to the monitoring occasion associated with the first signal; and
a PDCCH that corresponds to the PDCCH candidate associated with the first signal.

In a possible design, before the configuration message is sent, capability information of a terminal device may be further received.

The capability information of the terminal device indicates one or more of the following:

whether the terminal device supports PDCCH reception based on the first signal, or whether the terminal device supports the first signal;
a type of the first signal supported by the terminal device;
a quantity of types of the first signal supported by the terminal device;
whether the terminal device supports the first signal associated with the control resource set;
whether the terminal device supports the first signal associated with the search space;
whether the terminal device supports the first signal associated with the monitoring occasion;
whether the terminal device supports the first signal associated with the PDCCH candidate; and
a quantity of first signals supported by the terminal device.

According to a third aspect, a communication apparatus is provided. The apparatus includes a module, a unit, or a technical means used to perform the method according to the first aspect or any possible design of the first aspect.

For example, the communication apparatus may include:

a transceiver module, configured to receive a configuration message, where the configuration message includes a configuration parameter of a first signal; and
a processing module, configured to: control the transceiver module to receive the first signal based on the configuration parameter of the first signal; and if the first signal is successfully received, control the transceiver module to receive a PDCCH associated with the first signal.

In a possible design, the processing module is further configured to: if the first signal corresponds to a terminal device, determine that the first signal is successfully received.

In a possible design, the processing module is further configured to: if the first signal fails to be received, control the transceiver module not to receive the PDCCH associated with the first signal, or when PDCCH blind detection is performed, control the transceiver module to skip the PDCCH associated with the first signal.

In a possible design, the processing module is further configured to: if the first signal does not correspond to the terminal device, determine that the first signal fails to be received.

In a possible design, the configuration parameter of the first signal includes one or more of the following:

a first parameter, where the first parameter is used to determine to enable or disable the first signal;
a type of the first signal, where the type of the first signal includes one or more of a first signal associated with a control resource set, a first signal associated with a search space, a first signal associated with a monitoring occasion, and a first signal associated with a PDCCH candidate; and
an association relationship between the first signal and one or more of the following resources: a control resource set, a search space, a monitoring occasion, and a PDCCH candidate.

In a possible design, the association relationship between the first signal and a control resource set includes a control resource set associated with the first signal, or a first signal associated with a control resource set; or the association relationship between the first signal and a search space includes a search space associated with the first signal, or a first signal associated with a search space; or the association relationship between the first signal and a monitoring occasion includes a monitoring occasion associated with the first signal, or a first signal associated with a monitoring occasion; or the association relationship between the first signal and a PDCCH candidate includes a PDCCH candidate associated with the first signal, or a first signal associated with a PDCCH candidate.

In a possible design, the PDCCH associated with the first signal includes one or more of the following:

a PDCCH that corresponds to the control resource set associated with the first signal;
a PDCCH that corresponds to the search space associated with the first signal;
a PDCCH that corresponds to the monitoring occasion associated with the first signal; and
a PDCCH that corresponds to the PDCCH candidate associated with the first signal.

In a possible design, the processing module is further configured to control, based on the configuration parameter of the first signal, the transceiver module to receive the PDCCH associated with the first signal.
In a possible design, the transceiver module is further configured to: before receiving the configuration message, send capability information of the terminal device.
The capability information of the terminal device indicates one or more of the following:

whether the terminal device supports PDCCH reception based on the first signal, or whether the terminal device supports the first signal;
a type of the first signal supported by the terminal device;
a quantity of types of the first signal supported by the terminal device;
whether the terminal device supports the first signal associated with the control resource set;
whether the terminal device supports the first signal associated with the search space;
whether the terminal device supports the first signal associated with the monitoring occasion;
whether the terminal device supports the first signal associated with the PDCCH candidate; and
a quantity of first signals supported by the terminal device.

According to a fourth aspect, a communication apparatus is provided. The apparatus includes a module, a unit, or a technical means used to perform the method according to the second aspect or any possible design of the second aspect.
For example, the communication apparatus may include:
a transceiver module, configured to: send a configuration message, where the configuration message includes a configuration parameter of a first signal; and send the first signal and a PDCCH associated with the first signal.
Optionally, the communication apparatus may further include a processing module, configured to generate the configuration message.
In a possible design, the configuration parameter of the first signal includes one or more of the following:

a first parameter, where the first parameter is used to determine to enable or disable the first signal;
a type of the first signal, where the type of the first signal includes one or more of a first signal associated with a control resource set, a first signal associated with a search space, a first signal associated with a monitoring occasion, and a first signal associated with a PDCCH candidate; and
an association relationship between the first signal and one or more of the following resources: a control resource set, a search space, a monitoring occasion, and a PDCCH candidate.

In a possible design, the association relationship between the first signal and a control resource set includes a control resource set associated with the first signal, or a first signal associated with a control resource set; or the association relationship between the first signal and a search space includes a search space associated with the first signal, or a first signal associated with a search space; or the association relationship between the first signal and a monitoring occasion includes a monitoring occasion associated with the first signal, or a first signal associated with a monitoring occasion; or the association relationship between the first signal and a PDCCH candidate includes a PDCCH candidate associated with the first signal, or a first signal associated with a PDCCH candidate.
In a possible design, the PDCCH associated with the first signal includes one or more of the following:

a PDCCH that corresponds to the control resource set associated with the first signal;
a PDCCH that corresponds to the search space associated with the first signal;
a PDCCH that corresponds to the monitoring occasion associated with the first signal; and
a PDCCH that corresponds to the PDCCH candidate associated with the first signal.

In a possible design, the transceiver module is further configured to: before sending the configuration message, receive capability information of a terminal device.
The capability information of the terminal device indicates one or more of the following:

whether the terminal device supports PDCCH reception based on the first signal, or whether the terminal device supports the first signal;

a type of the first signal supported by the terminal device;
a quantity of types of the first signal supported by the terminal device;
whether the terminal device supports the first signal associated with the control resource set;
whether the terminal device supports the first signal associated with the search space;
whether the terminal device supports the first signal associated with the monitoring occasion;
whether the terminal device supports the first signal associated with the PDCCH candidate; and
a quantity of first signals supported by the terminal device.

According to a fifth aspect, a communication apparatus is provided. The apparatus includes a processor and an interface circuit. The interface circuit is electrically coupled to the processor, and the processor performs, by using a logic circuit or executing code instructions, the method according to the first aspect or any possible design of the first aspect or the method according to the second aspect or any possible design of the second aspect.

According to a sixth aspect, a computer-readable storage medium is provided. The storage medium stores a computer program or instructions. When the computer program or the instructions are run, the method according to the first aspect or any possible design of the first aspect is performed, or the method according to the second aspect or any possible design of the second aspect is performed.

According to a seventh aspect, a computer program product is provided, including instructions. When the instructions are run on a computer, the method according to the first aspect or any possible design of the first aspect is performed, or the method according to the second aspect or any possible design of the second aspect is performed.

According to an eighth aspect, a communication system is provided, including a terminal device and a network device. The terminal device is configured to perform the method according to the first aspect or any possible design of the first aspect, and the network device is configured to perform the method according to the second aspect or any possible design of the second aspect.

For specific designs and beneficial effects of the third aspect to the eighth aspect, refer to corresponding designs and beneficial effects of the first aspect and the second aspect.

## BRIEF DESCRIPTION OF DRAWINGS

FIG. 1 is an example diagram of a PDCCH configuration;
FIG. 2 is a diagram of an architecture of a possible communication system to which an embodiment of this application is applicable;
FIG. 3A and FIG. 3B are diagrams of an architecture of a possible communication system to which an embodiment of this application is applicable;
FIG. 4 is a flowchart of a communication method according to an embodiment of this application;
FIG. 5 is a diagram of a structure of a communication apparatus according to an embodiment of this application; and
FIG. 6 is a diagram of a structure of another communication apparatus according to an embodiment of this application.

## DESCRIPTION OF EMBODIMENTS

The following first explains some technical terms in embodiments of this application.

1. Physical Downlink Control Channel (physical downlink control channel, PDCCH): In a mobile communication system, the PDCCH is used to transmit downlink control information (downlink control information, DCI). The DCI mainly indicates: (1) downlink scheduling information, which is used by a terminal device to receive a physical downlink shared channel (physical downlink shared channel, PDSCH); (2) uplink scheduling information (or uplink grants (UL grants)), which is used by the terminal device to send a physical uplink shared channel (physical uplink shared channel, PUSCH); and (3) other physical layer control information, such as control signaling like a slot format indicator (slot format indicator, SFI), a resource preemption indicator (Preemption Indicator, PI), and a power control command, which assists the terminal device in receiving and sending data.

A signal carried on the PDCCH is referred to as a PDCCH signal. In some embodiments, the PDCCH signal may be referred to as a PDCCH for short. In other words, the PDCCH may be a physical downlink control channel, or may be a signal transmitted on the physical downlink control channel.

A network device may schedule a plurality of terminal devices in both uplink and downlink, that is, one network device may send a plurality of pieces of scheduling information in each slot. Each piece of scheduling information is transmitted on an independent PDCCH. In other words, one network device may simultaneously send a plurality of

PDCCHs in one slot.

Before the network device and the terminal device transmit the PDCCH, the network device needs to send a PDCCH configuration (for example, a control resource set (control resource set, CORESET) and a search space (search space)) to the terminal device, to configure a parameter related to PDCCH transmission for the terminal device, and assist the terminal device in receiving the PDCCH.

2. Control resource set (control resource set, CORESET):

The control resource set is mainly used to configure frequency domain resource information (for example, which resource blocks (resource block, RB) are occupied) and a part of time domain resource information (for example, a quantity of symbols that are occupied) of a PDCCH. A network device may configure one or more control resource sets for a terminal device for different purposes. One control resource set may be associated with one or more search spaces.

For example, the following is a configuration example of the control resource set:

```
    ControlResourceSet ::=                  SEQUENCE {
            controlResourceSetId                    ControlResourceSetId,
            frequencyDomainResources                BIT STRING (SIZE (45)),
        duration                                INTEGER (1..maxCoReSetDuration),
            cce-REG-MappingType                     CHOICE {
              interleaved                           SEQUENCE {
                  reg-BundleSize                        ENUMERATED {n2, n3, n6},
                  interleaverSize                       ENUMERATED {n2, n3, n6},
                  shiftIndex
INTEGER(0..maxNrofPhysicalResourceBlocks-1)
              },
              nonInterleaved                        NULL
            },
        precoderGranularity                     ENUMERATED {sameAsREG-bundle,
allContiguousRBs},
        tci-StatesPDCCH-ToAddList               SEQUENCE(SIZE (1..maxNrofTCI-
StatesPDCCH)) OF TCI-StateId
        tci-StatesPDCCH-ToReleaseList           SEQUENCE(SIZE (1..maxNrofTCI-
StatesPDCCH)) OF TCI-StateId
            tci-PresentInDCI                        ENUMERATED {enabled}
            pdcch-DMRS-ScramblingID                 INTEGER (0..65535)
    }
```

Some parameters in this example are described as follows:

controlResourceSetId indicates an index of a control resource set;
frequencyDomainResources indicates a frequency domain resource of a control resource set, and may be a bitmap

(bitmap), where each bit (bit) in the bitmap corresponds to six consecutive RBs;
duration indicates a quantity of consecutive orthogonal frequency division multiplexing (orthogonal frequency divided multiplexing, OFDM) symbols occupied by a time domain resource in a control resource set;
cce-REG-MappingType indicates a mapping mode of a control channel element (control channel element, CCE) and a resource element group (resource element group, REG), including interleaved and non-interleaved modes;
precoderGranularity indicates a precoding granularity of a PDCCH;
tci-StatesPDCCH-ToAddList indicates to add one or more transmission configuration indicator (transmission configuration indicator, TCI)-states (state);
tci-StatesPDCCH-ToReleaseList indicates to release one or more TCI-states;
tci-PresentInDCI indicates whether DCI includes a TCI field; and
pdcch-DMRS-ScramblingID indicates a scrambling identifier used by a PDCCH.

In some embodiments, a resource (for example, one or more symbols or one or more RBs) configured for the control resource set may also be referred to as a control resource set. In other words, the control resource set may indicate a resource, or may indicate a configuration parameter of the resource.

3. Search space (search space, SS): is also referred to as a search space set (search space set), and is mainly used to configure time domain resource information of a PDCCH, or is used to configure information related to PDCCH blind detection. For example, the search space set may include: a time domain period (or a blind detection period), indicating how many slots apart a search space appears once; a monitoring occasion (monitoring occasion) within one slot, indicating a symbol location at which a PDCCH may exist within one slot; and an aggregation level of a PDCCH, indicating a quantity of frequency domain resources used to carry the PDCCH, a quantity of PDCCH candidates (PDCCH candidate) at each type of aggregation level, and the like.

In some embodiments, a resource configured for the search space may also be referred to as a search space. In other words, the search space may indicate a resource, or may indicate a configuration parameter of the resource.

4. Monitoring occasion (monitoring occasion, MO):

One search space may include one or more monitoring occasions. In some embodiments, the search space may be indicated by using a monitoringSymbolsWithinSlot parameter. The monitoringSymbolsWithinSlot parameter is a 14-bit bitmap (bitmap), and each bit corresponds to an OFDM symbol. A value 1 of the bit indicates that the OFDM symbol corresponding to the bit is a 1$^{st}$ OFDM symbol in one search space, that is, X consecutive OFDM symbols starting from the OFDM symbol correspond to one monitoring occasion. X is indicated by a duration parameter in a CORESET, and indicates a quantity of time domain symbols occupied by a PDCCH. For example, if a value of monitoringSymbolsWithinSlot is 10000100000000, and a value of duration in an associated CORESET is 3, the search space has two monitoring occasions, where a 1$^{st}$ monitoring occasion is located in 1$^{st}$ to 3$^{rd}$ OFDM symbols, and a 2$^{nd}$ monitoring occasion is located in 6$^{th}$ to 8$^{th}$ OFDM symbols.

5. PDCCH candidate (PDCCH candidate):

The PDCCH candidate is also referred to as a potential PDCCH, and is a time-frequency resource location at which a network device may send a PDCCH. That is, a time-frequency resource location at which a PDCCH may exist is referred to as a PDCCH candidate. The network device may send a PDCCH or may not send a PDCCH on a PDCCH candidate. The PDCCH candidate may be configured based on an aggregation level of a set. For example, the network device may configure, for a terminal device, two PDCCH candidates with an aggregation level 4 and four PDCCH candidates with an aggregation level 8. In this case, the terminal device performs blind detection on the two PDCCH candidates with the aggregation level 4, and performs blind detection on the four PDCCH candidates with the aggregation level 8. The network device configures the PDCCH candidate to control a quantity of blind detection times at each type of aggregation level, to control complexity of PDCCH blind detection. A time-frequency location of the PDCCH candidate at each specific aggregation level is obtained through calculation according to a specific formula. The terminal device can determine the time-frequency location of the PDCCH candidate at each specific aggregation level, to attempt to receive a PDCCH at the time-frequency location.

The following is a configuration example of the search space:

```
SearchSpace ::=                          SEQUENCE {
        searchSpaceId                            SearchSpaceId,
    controlResourceSetId                     ControlResourceSetId
    monitoringSlotPeriodicityAndOffset      CHOICE {…}
    duration                                   INTEGER (2..2559)
    monitoringSymbolsWithinSlot               BIT STRING (SIZE (14))
    nrofCandidates                            SEQUENCE {…}
        searchSpaceType                          CHOICE {…}
}
```

Some parameters in this example are described as follows:

searchSpaceId indicates an index of a search space;
controlResourceSetId indicates an index of a CORESET associated with a search space;
monitoringSlotPeriodicity AndOffset indicates a search space period and a specific slot in which the search space is located in a period;
duration indicates a quantity of consecutive slots in a period, that is, a quantity of consecutive slots in a period in which the search space exists;
monitoringSymbolsWithinSlot indicates a monitoring occasion that exists in a slot;
nrofCandidates indicates a total quantity of blind detection times; and
searchSpaceType indicates a type of a blind detection space, and is used to determine a type of a PDCCH that corresponds to the blind detection space.

It should be understood that terms such as a control resource set, a search space, a monitoring occasion, and a PDCCH candidate in this application are all for ease of description, and are not limited to literal meanings. For example, the control resource set may generally be a configuration parameter of PDCCH frequency domain information, and may be replaced with any other term representing the PDCCH frequency domain information. For example, the search space may generally be a configuration parameter of PDCCH time domain information or PDCCH blind detection information, and may be replaced with any other term representing the PDCCH time domain information or the PDCCH blind detection information. For example, the monitoring occasion may generally be a configuration parameter of a time domain location of a PDCCH in a slot, and may be replaced with any other term representing the time domain location of the PDCCH in the slot. For example, the PDCCH candidate may generally be a configuration parameter of a time-frequency resource location at which a PDCCH may exist, and may be replaced with any other term representing the time-frequency resource location at which the PDCCH may exist.

A control resource set and a search space associated with the control resource set may be combined to determine all possible time-frequency resource locations of a PDCCH, and a terminal device may perform PDCCH blind detection at these time-frequency resource locations.

4. PDCCH blind detection:

PDCCH blind detection is a method for a terminal device to receive a PDCCH. Specifically, when the terminal device does not know a specific time-frequency resource location at which a PDCCH sent by a network device to the terminal device is located, the terminal device attempts, by using a blind attempt method, to receive the PDCCH at each time-frequency resource location (that is, each PDCCH candidate) at which the PDCCH may exist. A process in which the terminal device traverses each PDCCH candidate to sequentially determine whether a PDCCH for the terminal device exists on a time-frequency resource corresponding to each PDCCH candidate is blind detection. It may be understood that which PDCCH candidates need to be traversed by the terminal device are configured by the network device for the terminal device in advance (for example, configured by using a CORESET and a search space).

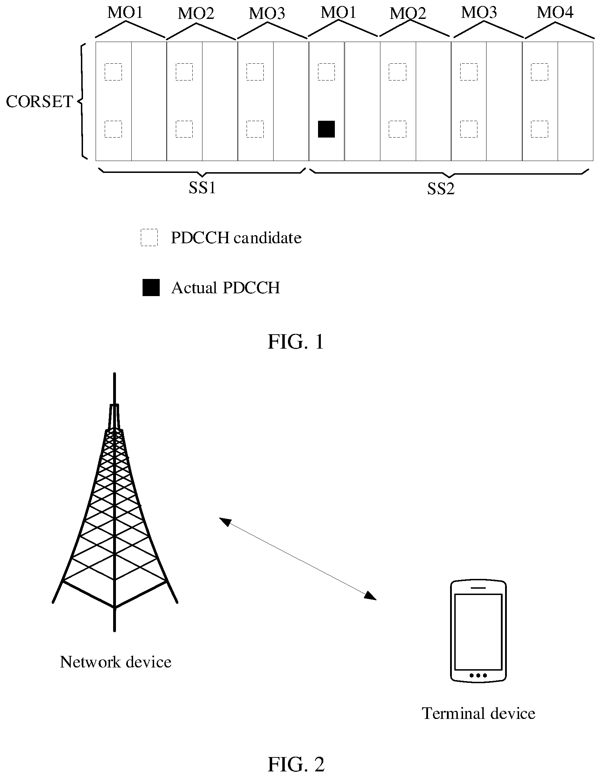

FIG. 1 shows an example of a PDCCH configuration. A network device configures a control resource set for a terminal device, and the control resource set is associated with two search spaces (SS1 and SS2). SS1 is configured with three monitoring occasions (MO1, MO2, and MO3), and SS2 is configured with four monitoring occasions (MO1, MO2,

MO3, and MO4). Two monitoring occasions are configured in both SS1 and SS2, and the two monitoring occasions appear in each monitoring occasion. Therefore, in SS1, there are actually 3x2=6 time-frequency resource locations at which a PDCCH may exist, and in SS2, there are actually 4x2=8 time-frequency resource locations at which a PDCCH may exist. When receiving the PDCCH, the terminal device sequentially traverses a signal of each PDCCH candidate in each monitoring occasion to perform receiving processing, such as descrambling, de-rate matching, decoding, and CRC check. If the decoding is successful, it indicates that the PDCCH for the terminal device actually exists on the monitoring occasion. If the decoding fails, it indicates that the PDCCH for the terminal device does not exist on the monitoring occasion. Based on the example provided in FIG. 1, the terminal device needs to traverse 14 PDCCH candidates to detect the PDCCH.

A disadvantage of the foregoing PDCCH reception method is that the terminal device needs to perform blind detection on all time-frequency resource locations (for example, all PDCCH candidates) configured by the network device for the terminal device, and complexity is very high.

In view of this, technical solutions in embodiments of this application are provided, to reduce complexity of PDCCH reception, so that the terminal device receives the PDCCH as required.

The technical solutions in embodiments of this application may be applied to various communication systems, for example, a 5th generation (5th generation, 5G) communication system, a 6th generation (6th generation, 6G) communication system, another future evolved system, other wireless communication systems that use radio access technologies. The technical solutions in embodiments of this application may be used.

FIG. 2 shows an example of a diagram of an architecture of a possible communication system to which an embodiment of this application is applicable. The system includes a terminal device and a network device. It may be understood that FIG. 2 is described by using one network device and one terminal device as an example. Actually, the communication system may further include other quantities of terminal devices and network devices.

The network device may include an access network device. Optionally, the network device may alternatively include a core network device. Unless otherwise specified, the network device in this embodiment of this application is the access network device.

The access network device may also be referred to as an access network element, a network apparatus, a radio access network (radio access network, RAN) entity, a RAN node, an access node, or the like, to help the terminal device implement radio access. Optionally, the RAN may be a cellular system related to the 3rd generation partnership project (3rd generation partnership project, 3GPP), for example, a 4G mobile communication system (such as a long term evolution (long term evolution, LTE) system), a 5G mobile communication system (such as a new radio (new radio, NR) system), or a future-oriented evolved system (such as a 6G mobile communication system). The RAN may alternatively be an open access network (open RAN, O-RAN or ORAN), a cloud radio access network (cloud radio access network, CRAN), or a wireless fidelity (wireless fidelity, Wi-Fi) system. The RAN may alternatively be a communication system that integrates two or more of the foregoing systems.

In a possible scenario, the network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The network device may alternatively be a macro base station, a micro base station or an indoor base station, a relay node or a donor node, or a radio controller in a CRAN scenario. Optionally, the network device may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes coordinate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP) or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, O-RAN, open RAN, or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Optionally, for network elements in the ORAN system, each network element may implement a protocol layer

function shown in the following Table 1.

Table 1

| ORAN network element | Protocol layer function |
|---|---|
| O-CU-CP | Radio resource control (radio resource control, RRC) and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), medium access control (medium access control, MAC), and high physical layer (PHY-high) |
| O-RU | Low physical layer (PHY-low) |

It should be noted that, in the ORAN system, the network device in this application may be one or more network elements in Table 1 above.

The following describes architectures of the CU and the DU of the access network device. The access network device includes at least one CU and at least one DU. Optionally, the access network device further includes at least one RU.

The following provides descriptions by using an example in which the access network device includes one CU and one DU. The CU has some functions of a core network, and the CU may include a CU-CP and a CU-UP. The CU and the DU may be configured based on protocol layer functions of a wireless network that are implemented by the CU and the DU. For example, the CU is configured to implement functions of a packet data convergence protocol (packet data convergence protocol, PDCP) layer and a protocol layer (for example, an RRC layer and/or an SDAP layer) above the PDCP layer, and the DU is configured to implement a function of a protocol layer (for example, an RLC layer, a MAC layer, and/or a physical (physical, PHY) layer) below the PDCP layer. For another example, the CU is configured to implement a function of a protocol layer (for example, an RRC layer and/or an SDAP layer) above a PDCP layer, and the DU is configured to implement a function of the PDCP layer and a protocol layer (for example, an RLC layer, a MAC layer, and/or a PHY layer) below the PDCP layer.

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may perform interaction with a network element configured to implement a control plane function in the core network. The network element for implementing the control plane function in the core network may be an access and mobility function network element, for example, an access and mobility function (access and mobility management function, AMF) in a 5G system. The access and mobility function network element is configured to be responsible for mobility management in a mobile network, for example, position update of a terminal device, network registration of the terminal device, and handover of the terminal device.

The CU-UP may perform interaction with a network element configured to implement a user plane function in the core network. The network element configured to implement the user plane function in the core network, for example, a user plane function (user plane function, UPF) in the 5G system, is configured to be responsible for forwarding and receiving data in the terminal device.

The foregoing configurations of the CU and the DU are merely examples. Alternatively, functions of the CU and the DU may be configured based on a requirement. For example, the CU or the DU may be configured to have functions of more protocol layers, or the CU or the DU may be configured to have a part of processing functions of protocol layers. For example, a part of functions of the RLC layer and functions of protocol layers above the RLC layer are set in the CU, and remaining functions of the RLC layer and functions of protocol layers below the RLC layer are set in the DU. For another example, division into functions of the CU or the DU may alternatively be performed based on service types or other system requirements. For example, division is performed based on a latency. Functions whose processing time needs to meet a requirement of a short latency are set in the DU, and functions whose processing time does not need to meet the latency requirement are set in the CU.

The DU and the RU may cooperate to jointly implement a function of the PHY layer. One DU may be connected to one or more RUs. Functions of the DU and the RU may be configured into a plurality of manners based on a design. For example, the DU is configured to implement a baseband function, and the RU is configured to implement intermediate

frequency and radio frequency functions. For another example, the DU is configured to implement a higher layer function of the PHY layer, and the RU is configured to implement a lower layer function of the PHY layer or implement the lower layer function and a radio frequency function. The higher-layer functions of the physical layer may include a part of functions of the physical layer, and the part of functions are closer to the MAC layer. The lower-layer functions of the physical layer may include another part of functions of the physical layer, and the part of functions are closer to an intermediate frequency and radio frequency side.

In embodiments of this application, a function of the network device may alternatively be performed by a module (for example, a chip) in the network device, or may be performed by a control subsystem including the function of the network device. Herein, the control subsystem including the function of the network device may be a control center in the foregoing application scenarios such as a smart grid, industrial control, smart transportation, and a smart city.

The terminal device may also be referred to as a terminal, a terminal apparatus, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, smart transportation, and a smart city. For example, the terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal device is not limited in embodiments of this application.

In embodiments of this application, a function of the terminal device may also be performed by a module (for example, a chip or a modem) in the terminal, or may be performed by an apparatus including a terminal function.

The network device and the terminal device may be at a fixed location, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

It may be understood that a network architecture and the application scenario described in embodiments of this application are intended to describe technical solutions in embodiments of this application more clearly, and do not constitute a limitation on the technical solutions provided in embodiments of this application. A person of ordinary skill in the art may know that, with evolution of the network architecture and emergence of new application scenarios, the technical solutions provided in embodiments of this application are also applicable to similar technical problems. In embodiments of this application, the communication system shown in FIG. 2 is used as an example for description. When the technical solutions in embodiments of this application are applied to another communication system, a device, a component, a module, and the like in the embodiments may be replaced with a corresponding device, component, and module in the another communication system. This is not limited.

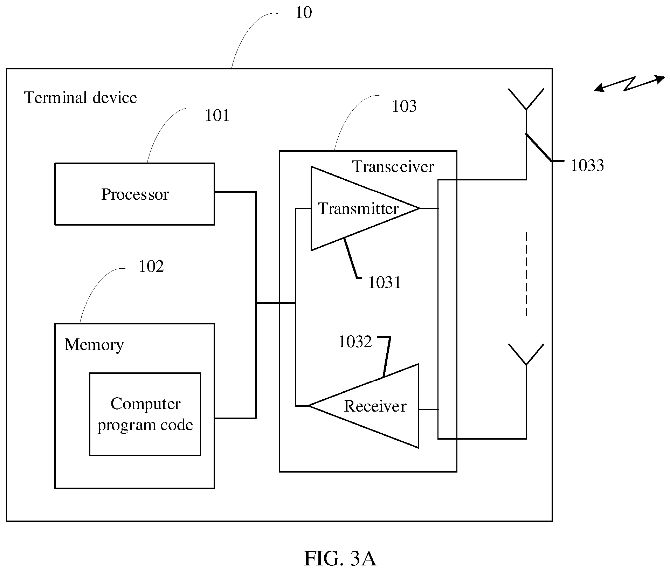

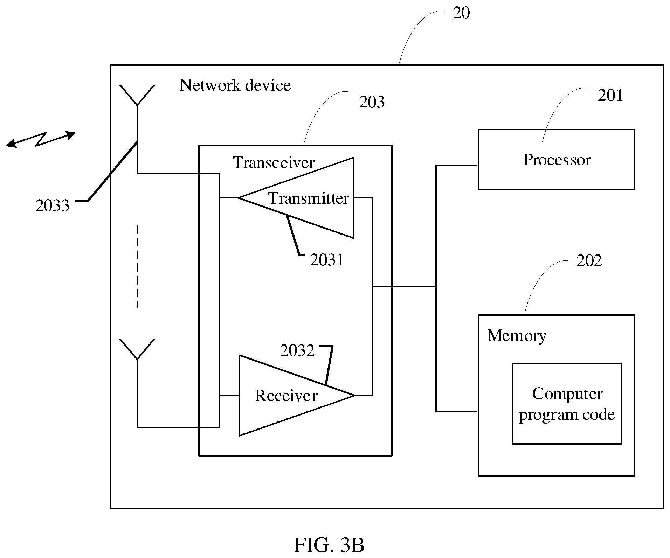

In the communication system shown in FIG. 2, communication between each network device and each terminal device may be alternatively represented in another form. For example, as shown in FIG. 3A and FIG. 3B, a terminal device 10 includes a processor 101, a memory 102, and a transceiver 103, and the transceiver 103 includes a transmitter 1031, a receiver 1032, and an antenna 1033; and a network device 20 includes a processor 201, a memory 202, and a transceiver 203. The transceiver 203 includes a transmitter 2031, a receiver 2032, and an antenna 2033. The receiver 1032 may be configured to receive a signal via the antenna 1033, and the transmitter 1031 may be configured to send a signal to the network device 20 via the antenna 1033. The transmitter 2031 may be configured to send a signal to the terminal device 10 via the antenna 2033, and the receiver 2032 may be configured to receive, via the antenna 2033, a signal sent by the terminal device 10.

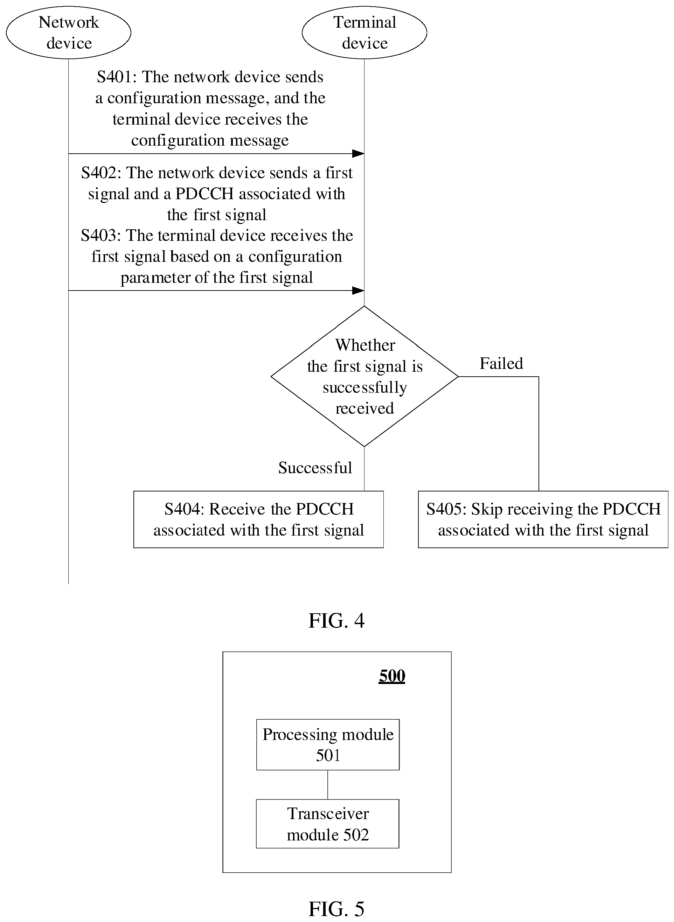

FIG. 4 is a flowchart of a communication method according to an embodiment of this application. The method may be applied to the communication system shown in FIG. 2. Unless otherwise specified, the "network device" in this application may be the network device itself (for example, the network device shown in FIG. 2), may be a component (for example, a processor, a chip, or a chip system) in the network device, or may be a logical module or software that can implement all or a part of functions of the network device; and the "terminal device" in this application may be the terminal device itself (for example, the terminal device shown in FIG. 2), may be a component (for example, a processor, a chip, or a chip system) in the terminal device, or may be a logical module or software that can implement all or a part of functions of the terminal device.

As shown in FIG. 4, the method includes steps S401 to S405.

S401: The network device sends a configuration message, and the terminal device receives the configuration message.

It may be understood that when the network device is implemented by using a plurality of RAN nodes, for example, when the network device is a network device in an ORAN system, the network device sending the configuration message may be specifically one of the O-CU, the O-DU, and the O-RU sending the configuration message, or a plurality of

the O-CU, the O-DU, and the O-RU jointly sending the configuration message.

In this embodiment of this application, the configuration message includes a configuration parameter of a first signal; the configuration message includes the configuration parameter, and the configuration parameter is used to configure the first signal; the configuration message includes the configuration parameter, and the configuration parameter is used to configure the first signal to be associated with a PDCCH; or the like.

The first signal is used to determine (or indicate) whether there is a PDCCH, or the first signal is used by the terminal device to determine (or judge) whether there is a PDCCH sent to the terminal device; or the first signal is used to determine (or indicate) whether the network device sends a PDCCH, or the first signal is used by the terminal device to determine (or judge) whether the network device sends a PDCCH to the terminal device; or the first signal is used to determine (or indicate) which time-frequency resource locations at which a PDCCH is sent, or the first signal is used by the terminal device to determine (or judge) which time-frequency resource locations at which the network device sends a PDCCH to the terminal device; or the first signal indicates whether the terminal device needs to perform PDCCH detection, or the first signal indicates which time-frequency resource locations (for example, a time-frequency resource location associated with the first signal) at which the terminal device needs to perform PDCCH detection; or the first signal is used by the terminal device to discover a PDCCH sent to the terminal device; or the like.

In a possible design, a name of the first signal may be a control discovery signal (control discovery signal, CDS), indicating that the first signal may be used by the terminal device to discover a PDCCH. A name of the first signal may be a control detection signal (control Detection signal, CDS), indicating that the first signal may be used by the terminal device to check a PDCCH. Certainly, these are merely examples, and a specific name of the first signal is not limited in embodiments of this application.

In a possible design, the first signal may be a reference signal sent on a PDCCH, for example, a demodulation reference signal (demodulation reference signal, DMRS). In this way, there is no need to additionally design a new signal type, and system resources can be saved.

In a possible design, the first signal may be a user-level (or a terminal device-level) signal. For example, the first signal may be a sequence (for example, a CDS sequence). One user may correspond to one sequence or a plurality of different sequences. Optionally, different users correspond to different sequences. Optionally, different users may correspond to a same sequence. For example, a plurality of terminal devices belong to a same user group, and all users in the user group may correspond to a same sequence. Optionally, the terminal device may store a first signal of a user that corresponds to the terminal device.

In a possible implementation, configuration parameters of first signals sent by the network device to different terminal devices may be different. For example, the configuration message sent by the network device to each terminal device includes only a configuration parameter of a first signal that corresponds to the terminal device. For example, the configuration message sent by the network device to a first terminal device includes a configuration parameter of a first signal that corresponds to the first terminal device, and the configuration message sent by the network device to a second terminal device includes a configuration parameter of a first signal that corresponds to the second terminal device.

An example in which configuration parameters are represented by using a table is used. Table 1A and Table 1B respectively represent configuration parameters of the first signal sent by the network device to the first terminal device and configuration parameters of the first signal sent by the network device to the second terminal device. The first signal that corresponds to the first terminal device is CDS-1, and configuration parameters of CDS-1 are A1, B1, and C1; and the first signal that corresponds to the second terminal device is CDS-2, and configuration parameters of CDS-2 are A2, B2, and C2.

Table 1A Configuration parameters of the first signal sent by the network device to the first terminal device

| First signal | Configuration parameter |
|---|---|
| CDS-1 | A1, B1, and C1 |

Table 1B Configuration parameters of the first signal sent by the network device to the second terminal device

| First signal | Configuration parameter |
|---|---|
| CDS-2 | A2, B2, and C2 |

It should be understood that Table 1A and Table 1B are merely used to illustrate that the configuration parameters of the first signals sent by the network device to different terminal devices may be different. A specific representation form of the configuration parameter of the first signal is not limited in embodiments of this application.

In another possible implementation, configuration parameters of first signals sent by the network device to different terminal devices may be the same. For example, the configuration message sent by the network device to each of

a plurality of terminal devices includes configuration parameters of first signals that correspond to the plurality of terminal devices. After receiving the configuration message, each terminal device determines, from the configuration parameters of the first signals that correspond to the plurality of terminal devices, the configuration parameter of the first signal that corresponds to the terminal device. For example, the configuration messages sent by the network device to a first terminal device and a second terminal device both include a configuration parameter of a first signal that corresponds to the first terminal device and a configuration parameter of a first signal that corresponds to the second terminal device. After receiving the configuration message, the first terminal device determines, from the configuration message, the configuration parameter of the first signal that corresponds to the first terminal device; and after receiving the configuration message, the second terminal device determines, from the configuration message, the configuration parameter of the second signal that corresponds to the second terminal device. It may be understood that in addition to a configuration parameter of a first signal that corresponding to the terminal device, the configuration message received by the terminal device in S401 may further include a configuration parameter of a first signal that corresponds to another terminal device.

An example in which configuration parameters are represented by using a table is used. Table 1C represents configuration parameters of the first signals sent by the network device to the first terminal device and the second terminal device. One row in the table corresponds to the configuration parameters of the first signal. The first signal that corresponds to the first terminal device is CDS-1, and configuration parameters of CDS-1 are A1, B1, and C1; and the first signal that corresponds to the second terminal device is CDS-2, and configuration parameters of CDS-2 are A2, B2, and C2.

Table 1C Configuration parameters of the first signal

| First signal | Configuration parameter |
|---|---|
| CDS-1 | A1, B1, and C1 |
| CDS-2 | A2, B2, and C2 |

It should be understood that Table 1C is merely used to illustrate that the configuration parameters of the first signals sent by the network device to different terminal devices may be the same. A specific representation form of the configuration parameter of the first signal is not limited in embodiments of this application.

Further, one terminal device may correspond to one first signal or a plurality of different first signals (for example, a plurality of different CDS sequences). Correspondingly, when the terminal device corresponds to one first signal, the configuration message received by the terminal device includes a configuration parameter that corresponds to the first signal. When the terminal device corresponds to a plurality of first signals, the configuration message received by the terminal device includes a configuration parameter that corresponds to each of the plurality of first signals. It may be understood that the configuration message received by the terminal device in S401 may include a configuration parameter of one or more first signals that correspond to the terminal device.

An example in which configuration parameters are represented by using a table is used. Table 1D represents configuration parameters of first signals sent by the network device to a first terminal device. The first signals that correspond to the first terminal device include CDS-1 and CDS-3, and configuration parameters of CDS-1 are A1, B1, and C1, and configuration parameters of CDS-3 are A3, B3, and C3.

Table 1D Configuration parameters of the first signals sent by the network device to the first terminal device

| First signal | Configuration parameter |
|---|---|
| CDS-1 | A1, B1, and C1 |
| CDS-3 | A3, B3, and C3 |

It should be understood that Table 1C is merely used to illustrate that the network device may send configuration parameters of a plurality of first signals to a same terminal device. A specific representation form of the configuration parameter of the first signal is not limited in embodiments of this application.

In a possible design, the configuration parameter of the first signal includes one or more of the following.

1. First parameter. The first parameter is used to determine (or indicate) to enable or disable the first signal, or the first parameter is used to determine (or indicate) whether to receive a PDCCH based on the first signal.

It may be understood that when the first parameter indicates that the first signal is enabled, the terminal device needs to first receive the first signal and then receive the PDCCH (as shown in step S402 in the following). When the first

parameter indicates that the first signal is disabled, the terminal device may not receive the PDCCH, or the terminal device may not receive the PDCCH based on the first signal, for example, may receive the PDCCH in a PDCCH blind detection manner.

There may be a plurality of implementations for the first parameter. The following lists several possible implementations.

Implementation 1: The first parameter has two values, which respectively indicate that the first signal is enabled and that the first signal is disabled. For example, the first parameter is a bit. When the bit is 0, it indicates that the first signal is enabled, and when the bit is 1, it indicates that the first signal is disabled. Alternatively, when the bit is 1, it indicates that the first signal is enabled, and when the bit is 0, it indicates that the first signal is disabled.

Manner 2: The first parameter has only one value, which indicates that the first signal is enabled. In other words, as long as the configuration parameter carries the first parameter, it indicates that the first signal is enabled. When the configuration parameter does not carry the first parameter, it indicates that the first signal is disabled by default.

Manner 3: The first parameter has only one value, which indicates that the first signal is disabled. In other words, when the first parameter is not configured, or the first parameter in the configuration parameter is left empty, it indicates that the first signal is enabled by default. When the first parameter is configured, it indicates that the first signal is disabled.

Certainly, the foregoing three implementations are merely examples, and actual application is not limited thereto.

2. Type of the first signal

The type of the first signal herein is a used type of the first signal. Specifically, the type of the first signal may be a type of the first signal that is used by the network device, a type of the first signal that is allowed to be used by the terminal device, and/or the like.

In a possible design, the type of the first signal may be distinguished based on a type of a resource associated with the first signal. For example, the type of the first signal includes but is not limited to one or more of the following:

A. First signal associated with a control resource set, where when the type of the first signal is the first signal associated with the control resource set, the terminal device needs to receive the PDCCH in the control resource set associated with the first signal.

B. First signal associated with a search space, where when the type of the first signal is the first signal associated with the search space, the terminal device needs to receive the PDCCH in the search space associated with the first signal.

C. First signal associated with a monitoring occasion, where when the type of the first signal is the first signal associated with the monitoring occasion, the terminal device needs to receive the PDCCH in the monitoring occasion associated with the first signal.

D. First signal associated with a PDCCH candidate, where when the type of the first signal is the first signal associated with the PDCCH candidate, the terminal device needs to receive the PDCCH in the PDCCH candidate associated with the first signal.

Certainly, the foregoing is merely several examples, and an actual application is not limited thereto.

In a possible example, a standard, a protocol, or a system specifies a type of the first signal, and the network device may indicate, in the configuration parameter, whether to use the type of the first signal specified in the standard, the protocol, or the system.

For example, the standard specifies that the type of the first signal is the first signal associated with the control resource set (or the search space, the monitoring occasion, or the PDCCH candidate). The terminal device may carry one bit in the configuration parameter to indicate whether to use the first signal associated with the control resource set (or the search space, the monitoring occasion, or the PDCCH candidate). For example, when the bit is 0, it indicates that the first signal associated with the control resource set is used, or when the bit is 1, it indicates that the first signal associated with the control resource set is not used; or when the bit is 1, it indicates that the first signal associated with the control resource set is used, or when the bit is 0, it indicates that the first signal associated with the control resource set is not used; or when the configuration parameter carries the bit, it indicates that the first signal associated with the control resource set is used, or when the configuration parameter does not carry the bit, it indicates that the first signal associated with the control resource set is not used; or when the configuration parameter does not carry the bit, it indicates that the first signal associated with the control resource set is used, or when the configuration parameter carries the bit, it indicates that the first signal associated with the control resource set is not used.

In another possible example, the network device carries, in the configuration parameter, an identifier of the used type of the first signal. For example, per CORESET CDS, per Search Space CDS, per Monitoring occasion CDS, and per PDCCH candidate CDS respectively represent a first signal associated with a control resource set, a first signal associated with a search space, a first signal associated with a monitoring occasion, and a first signal associated with a PDCCH candidate.

In another possible example, the network device carries a bitmap (bitmap) in the configuration parameter. Each bit of the bitmap corresponds to a type of the first signal, and a value of each bit indicates whether the type of the first signal corresponding to the bit is used. For example, the bitmap includes four bits in total, and a 1st bit to a 4th bit respectively correspond to the first signal associated with the control resource set, the first signal associated with the search space, the first signal associated with the monitoring occasion, and the first signal associated with the PDCCH candidate. For example, a value 1 of the bit indicates that the type of the first signal is used, and a value 0 of the bit indicates that the type of the first signal is not used, and the bitmap is, for example, "1100", which indicates that used types of the first signal are the first signal associated with the control resource set and the first signal associated with the search space.
Certainly, the foregoing is merely some examples, and an actual application is not limited thereto.

3. Association relationship between the first signal and a resource

The resource may be a time domain resource, a frequency domain resource, or a time-frequency resource. This is not limited.
The association relationship of the resource of the first signal indicates which type of resource with which the first signal is associated. For example, the association relationship between the first signal and a resource includes but is not limited to one or more of the following association relationships.

A. Association relationship between the first signal and a control resource set

The association relationship between the first signal and a control resource set indicates that the type of the resource associated with the first signal is a control resource set.
Optionally, the association relationship between the first signal and a control resource set may further indicate that which first signals are associated with which control resource sets. One first signal may be associated with one control resource set, one first signal may be associated with a plurality of control resource sets, a plurality of first signals may be associated with one control resource set, or the like.
A specific representation form of the association relationship between the first signal and a control resource set may be one or more control resource sets (for example, CDS-1 is associated with CORESET-1 and CORESET-2) associated with the first signal, or one or more control signals (for example, CORESET-1 is associated with CDS-1 and CDS-2) associated with the control resource set. This is not limited in embodiments of this application. For example, the configuration message is used to configure the first signal CDS-1, and the configuration message carries identifiers of control resource sets associated with CDS-1, for example, CORESET-1 and CORESET-2, indicating that CDS-1 is associated with CORESET-1 and CORESET-2. Alternatively, for example, the configuration message is used to configure the control resource set CORESET-1, and the configuration message carries identifiers of first signals associated with CORESET-1, for example, CDS-1 and CDS-2, indicating that CORESET-1 is associated with CDS-1 and CDS-2.

B. Association relationship between the first signal and a search space

The association relationship between the first signal and a search space indicates that the type of the resource associated with the first signal is a search space.
Optionally, the association relationship between the first signal and a search space may further indicate that which first signals are associated with which search spaces. One first signal may be associated with one search space, one first signal may be associated with a plurality of search spaces, a plurality of first signals may be associated with one search space, or the like.
A specific representation form of the association relationship between the first signal and a search space may be one or more search spaces (for example, CDS-1 is associated with SS-1 and SS-2) associated with the first signal, or one or more control signals (for example, SS-1 is associated with CDS-1 and CDS-2) associated with the search space. This is not limited in embodiments of this application. For example, the configuration message is used to configure the first signal CDS-1, and the configuration message carries identifiers of search spaces associated with CDS-1, for example, SS-1 and SS-2, indicating that CDS-1 is associated with SS-1 and SS-2. Alternatively, for example, the configuration message is used to configure the search space SS-1, and the configuration message carries identifiers of first signals associated with SS-1, for example, CDS-1 and CDS-2, indicating that SS-1 is associated with CDS-1 and CDS-2.

C. Association relationship between the first signal and a monitoring occasion

The association relationship between the first signal and a monitoring occasion indicates that the type of the resource associated with the first signal is a monitoring occasion.
Optionally, the association relationship between the first signal and a monitoring occasion may further indicate

that which first signals are associated with which monitoring occasions. One first signal may be associated with one monitoring occasion, one first signal may be associated with a plurality of monitoring occasions, a plurality of first signals may be associated with one monitoring occasion, or the like.

A specific representation form of the association relationship between the first signal and a monitoring occasion may be one or more monitoring occasions (for example, CDS-1 is associated with MO-1 and MO-2) associated with the first signal, or one or more control signals (for example, MO-1 is associated with CDS-1 and CDS-2) associated with the monitoring occasion. This is not limited in embodiments of this application. For example, the configuration message is used to configure the first signal CDS-1, and the configuration message carries identifiers of monitoring occasions associated with CDS-1, for example, MO-1 and MO-2, indicating that CDS-1 is associated with MO-1 and MO-2. Alternatively, for example, the configuration message is used to configure the monitoring occasion MO-1, and the configuration message carries identifiers of first signals associated with MO-1, for example, CDS-1 and CDS-2, indicating that MO-1 is associated with CDS-1 and CDS-2.

D. Association relationship between the first signal and a PDCCH candidate

The association relationship between the first signal and a PDCCH candidate indicates that the type of the resource associated with the first signal is a PDCCH candidate.

Optionally, the association relationship between the first signal and a PDCCH candidate may further indicate that which first signals are associated with which PDCCH candidates. One first signal may be associated with one PDCCH candidate, one first signal may be associated with a plurality of PDCCH candidates, a plurality of first signals may be associated with one PDCCH candidate, or the like.

A specific representation form of the association relationship between the first signal and a PDCCH candidate may be one or more PDCCH candidates (for example, CDS-1 is associated with PDCCH candidate-1 and PDCCH candidate-2) associated with the first signal, or one or more control signals (for example, a PDCCH candidate is associated with CDS-1 and CDS-2) associated with the PDCCH candidate. This is not limited in embodiments of this application. For example, the configuration message is used to configure the first signal CDS-1, and the configuration message carries identifiers of PDCCH candidates associated with CDS-1, for example, PDCCH candidate-1 and PDCCH candidate-2, indicating that CDS-1 is associated with PDCCH candidate-1 and PDCCH candidate-2. Alternatively, for example, the configuration message is used to configure the PDCCH candidate PDCCH candidate-1, and the configuration message carries identifiers of first signals associated with PDCCH candidate-1, for example, CDS-1 and CDS-2, indicating that PDCCH-1 is associated with CDS-1 and CDS-2.

It may be understood that the association relationship between the first signal and a resource may include any one of A, B, C, and D, or may include a combination of A, B, C, and D. When there are a plurality of association relationships between the first signal and resources, the resources associated with the first signal may be determined in combination with the plurality of association relationships. For example, the association relationships between the first signal and resources include: an association relationship between the first signal and a control resource set CORESET-1, an association relationship between the first signal and a search space SS-1, and association relationships between the first signal and monitoring occasions MO-1 and MO-2. In this case, the resources associated with the first signal are a resource CORESET-1 in frequency domain, and MO-1 and MO-2 in a resource SS-11 in time domain.

It may be understood that when the configuration message includes both the type of the first signal and an association relationship between the first signal and a resource, the type of the first signal corresponds to (or matches) the association relationship between the first signal and a resource. For example, when the type of the first signal includes the first signal associated with a control resource set, the association relationship between the first signal and a resource includes the association relationship between the first signal and a control resource set. For example, when the type of the first signal includes the first signal associated with a search space, the association relationship between the first signal and a resource includes the association relationship between the first signal and a search space. For example, when the type of the first signal includes the first signal associated with a monitoring occasion, the association relationship between the first signal and a resource includes the association relationship between the first signal and a monitoring occasion. For example, when the type of the first signal includes the first signal associated with a PDCCH candidate, the association relationship between the first signal and a resource includes the association relationship between the first signal and a PDCCH candidate.

It may be understood that the first parameter, the type of the first signal, and the association relationship between the first signal and a resource do not necessarily all exist in the configuration message. For example, if the first signal is enabled by default in a system or according to a standard, the configuration message may not carry the first parameter. For example, if the type of the first signal is specified by default in a system or according to a standard, the configuration message may not carry the type of the first signal. For example, if a resource associated with each type of first signal is specified by default in a system or according to a standard, the configuration message may not carry an association relationship between the first signal and the resource.

It may be understood that when the type of the first signal is the first signal associated with a control resource set (or the association relationship between the first signal and a resource is the association relationship between the first signal and a control resource set), the network device needs to send the first signal at a control resource set granularity. For example, one first signal is sent corresponding to one or more control resource sets, and there is a PDCCH in the one or more control resource sets. Compared with other types of the first signal, first signal overheads corresponding to this type are less.

When the type of the first signal is the first signal associated with a PDCCH candidate (or the association relationship between the first signal and a resource is the association relationship between the first signal and a PDCCH candidate), the network device needs to send the first signal at a PDCCH candidate granularity. For example, one first signal is sent corresponding to one or more PDCCH candidates, and there is a PDCCH in the one or more PDCCH candidates. Compared with other types of the first signal, this type corresponds to a quantity of PDCCH detection times corresponding to this type is smaller.

In a possible design, the configuration message may further carry a resource configuration parameter. The resource configuration parameter is used to configure a PDCCH resource. The PDCCH resource configuration parameter includes, for example, but is not limited to, one or more of a control resource set, a search space, a monitoring occasion, a PDCCH candidate, and the like. During specific implementation, the network device may configure one or more control resource sets and one or more search spaces for the terminal device. Each control resource set is associated with one or more search spaces. Each search space may include one or more monitoring occasions. Each search space may further include one or more PDCCH candidates. One or more PDCCH candidates included in a search space exist in each monitoring occasion included in the search space.

In a possible design, the configuration message is a radio resource control (Radio Resource Control, RRC) message (or RRC signaling), or the configuration message is carried in an RRC message (or RRC signaling).

S402: The network device sends the first signal and a PDCCH associated with the first signal.

It may be understood that when the network device is implemented by using a plurality of RAN nodes, for example, when the network device is a network device in an ORAN system, the network device sending the first signal and the PDCCH associated with the first signal may be specifically one of the O-CU, the O-DU, and the O-RU sending the first signal and the PDCCH associated with the first signal, or a plurality of the O-CU, the O-DU, and the O-RU jointly sending the first signal and the PDCCH associated with the first signal.

It may be understood that the network device sending the first signal herein may be sending the first signal to one terminal device or sending the first signal to a plurality of terminal devices. In other words, the first signal sent by the network device herein includes a first signal corresponding to one terminal device or first signals corresponding to a plurality of terminal devices. A quantity of first signals sent by the network device to each terminal device may be one or more. This is not limited.

The PDCCH associated with the first signal is a PDCCH corresponding to a resource associated with the first signal. For example, the PDCCH associated with the first signal includes one or more of the following: a PDCCH corresponding to (one or more) control resource sets associated with the first signal, a PDCCH corresponding to (one or more) search spaces associated with the first signal, a PDCCH corresponding to (one or more) monitoring occasions associated with the first signal, a PDCCH corresponding to (one or more) PDCCH candidates associated with the first signal, and the like.

S403: The terminal device receives the first signal based on the configuration parameter of the first signal.

Specifically, the terminal device detects, based on the configuration parameter of the first signal, whether the network device sends the first signal to the terminal device, or the terminal device detects, based on the configuration parameter of the first signal, whether the network device sends a first signal corresponding to the terminal device. For example, the configuration parameter of the first signal includes the first parameter. If the first parameter indicates to enable the first signal, the terminal device detects whether the network device sends the first signal to the terminal device. If the first parameter indicates to disable the first signal, the terminal device does not detect whether the network device sends the first signal to the terminal device. For example, the configuration parameter includes a type of the first signal, and the terminal device detects, based on the type of the first signal, whether the network device sends the first signal of the type to the terminal device.

It may be understood that when the configuration message includes configuration parameters of first signals for a plurality of terminal devices, the terminal device specifically receives the first signal based on the configuration parameter of the first signal corresponding to the terminal device. The configuration parameter shown in Table 1C is used as an example. The configuration parameter of the first signal received by the first terminal device includes the configuration parameter of CDS-1 and the configuration parameter of CDS-2. CDS-1 corresponds to the first terminal device, and CDS-2 corresponds to the second terminal device. In this case, the first terminal device detects, based on the configuration parameter of CDS-1, whether the network device sends CDS-1 to the terminal device.

It may be understood that when the configuration parameter includes configuration parameters of a plurality of first signals corresponding to the terminal device, the terminal device receives the first signals based on the configuration

parameter that is of each first signal corresponding to the terminal device and that is in the configuration parameters. The configuration parameter shown in Table 1D is used as an example. The configuration parameter of the first signal received by the first terminal device includes the configuration parameter of CDS-1 and the configuration parameter of CDS-3. Both CDS-1 and CDS-3 correspond to the first terminal device. In this case, the first terminal device detects, based on the configuration parameter of CDS-1, whether the network device sends CDS-1 to the terminal device, and detects, based on the configuration parameter of CDS-3, whether the network device sends CDS-3 to the terminal device.

In some embodiments, a time-frequency resource location of the first signal may be preconfigured (a time-frequency resource of the first signal may be configured by the network device (for example, the time-frequency resource location of the first signal is indicated in a time-frequency resource configuration parameter), or the time-frequency resource location of the first signal is specified in a standard or a protocol, and this is not limited). A process in which the terminal device receives the first signal based on the configuration parameter of the first signal may include the following: First, the terminal device detects the first signal at all time-frequency resource locations at which the first signal may exist. If a first signal is detected at any time-frequency resource location, correlation matching (or correlation detection) is performed between the first signal and a first signal (for example, a first signal stored by the terminal device) corresponding to the terminal device. Then, the terminal device determines, based on a correlation matching result, whether the received first signal is the first signal corresponding to the terminal device. If correlation matching is successful, for example, a correlation value exceeds a threshold, it indicates that the received first signal corresponds to the terminal device, and the terminal device successfully receives the first signal. If correlation matching fails, for example, the correlation value does not exceed the threshold, it indicates that the received first signal does not correspond to the terminal device, and the terminal device fails to receive the first signal.

For example, the terminal device detects CDS-1 at a first time-frequency resource location, and detects CDS-2 at a second time-frequency resource location. The terminal device separately performs correlation matching between a CDS corresponding to the terminal device, and CDS-1 and CDS-2. A matching result is that CDS-1 corresponds to the terminal device, and CDS-2 does not correspond to the terminal device. In this case, the terminal device successfully receives CDS-1, but fails to receive CDS-2.

Further, after the terminal device receives the first signal, the terminal device determines, based on a receiving status (successful or failed) of the first signal, whether to perform PDCCH reception (or detection or blind detection), or determines on which resources PDCCH reception (or detection or blind detection) needs to be performed.

If successfully receiving the first signal, the terminal device performs the following step:

S404: The terminal device receives the PDCCH associated with the first signal.

If failing to receive the first signal, the terminal device performs the following step:

S405: The terminal device does not receive the PDCCH associated with the first signal.

It may be understood that a quantity of first signals successfully received by the terminal device may be one or more, depending on an actual situation; and a quantity of first signals failing to be received by the terminal device may be one or more, depending on an actual situation. In addition, when the terminal device receives a plurality of first signals, the terminal may successfully receive all first signals (for example, the terminal device detects CDS-1, and CDS-1 is successfully received), or may fail to receive all first signals (for example, the terminal device detects CDS-2, and CDS-2 fails to be received), or may fail to receive a part of first signals (for example, the terminal device detects CDS-1 and CDS-2, and CDS-1 is successfully received, and CDS-2 fails to be received). In other words, only one of S404 and S405 exists, or both S404 and S405 exist. When both S404 and S405 exist, the first signal in S404 is different from the first signal in S405.

It may be understood that the terminal device receiving the PDCCH associated with the first signal means the terminal device successfully receiving the PDCCH associated with the first signal. The terminal device not receiving the PDCCH associated with the first signal includes: The terminal device does not receive a PDCCH associated with the first signal that is not successfully (that is, fails to be) received. For example, if the first terminal device successfully receives CDS-1 but fails to receive CDS-2, the first terminal device receives a PDCCH associated with CDS-1, and the first terminal device does not receive a PDCCH associated with CDS-2.

In some embodiments, that the terminal device does not receive the PDCCH associated with the first signal may alternatively be described as follows: In a process of performing PDCCH blind detection (or detection), the terminal device skips the PDCCH associated with the first signal.

In some embodiments, the PDCCH associated with the first signal is a PDCCH corresponding to a resource associated with the first signal. When the configuration parameter of the first signal includes the association relationship between the first signal and a resource, the terminal device may further receive, based on the configuration parameter of the first signal, the PDCCH associated with the first signal. For example, the terminal device receives, based on the association relationship between the first signal and a control resource set, a PDCCH in the control resource set associated with the first signal. For example, the terminal device receives, based on the association relationship between the first signal and a search space, a PDCCH in the search space associated with the first signal. For example, the terminal device receives, based on the association relationship between the first signal and a monitoring occasion, a PDCCH in the

monitoring occasion associated with the first signal. For example, the terminal device receives, based on the association relationship between the first signal and a PDCCH candidate, a PDCCH in the PDCCH candidate associated with the first signal.

In the foregoing solution, the first signal is introduced, so that the terminal device can determine, based on the first signal, whether the network device sends a PDCCH to the terminal device (or which resources on which the network device sends a PDCCH to the terminal device). In this way, the terminal device avoids traversing all possible time-frequency resource locations for PDCCH blind detection, so that the terminal device receives the PDCCH as required, and the terminal device avoids traversing all possible time-frequency resource locations for PDCCH blind detection, so that complexity of PDCCH reception is reduced for the terminal device, and power consumption of the terminal device is reduced.

In a possible design, before S401, the terminal device may further report capability information of the terminal device to the network device, so that the network device can deliver the configuration message and transmit the first signal based on the capability information of the terminal device. For example, the terminal device sends the capability information of the terminal device, and the network device receives the capability information. The capability information of the terminal device may indicate one or more of the following.

A. Whether the terminal device supports PDCCH reception based on the first signal, whether the terminal device supports the first signal, or whether the terminal device supports enabling of the first signal

Optionally, when the terminal device supports the first signal, the network device may indicate, in the configuration parameter of the first signal sent by the network device to the terminal device, to enable the first signal. When the terminal device does not support the first signal, the network device may indicate, in the configuration parameter sent by the network device to the terminal device, to disable the first signal. For example, a first parameter is carried in the configuration parameter of the first signal sent to the terminal device, and the first parameter indicates to enable or disable the first signal.

During specific implementation, the terminal device may carry a second parameter in the capability information to indicate whether the terminal device supports the first signal. There are a plurality of implementations of the second parameter. The following lists several possible examples.

Manner 1: The second parameter has two values, which respectively indicate that the first signal is supported and that the first signal is not supported. For example, the second parameter is a bit. When the bit is 0, it indicates that the first signal is supported, and when the bit is 1, it indicates that the first signal is not supported. Alternatively, when the bit is 1, it indicates that the first signal is supported, and when the bit is 0, it indicates that the first signal is not supported.

Manner 2: The second parameter has only one value, which indicates that the first signal is supported. In other words, as long as the capability information carries the second parameter, it indicates that the first signal is supported. When the capability information does not carry the second parameter, it indicates that the first signal is not supported by default.

Manner 3: The second parameter has only one value, which indicates that the first signal is not supported. In other words, when the second parameter is not configured, or the second parameter in the capability information is left empty, it indicates that the first signal is supported by default. When the second parameter is configured, it indicates that the first signal is not supported.

Certainly, the foregoing three manners are merely examples.

The terminal device reports the information, so that the network device can send the configuration parameter of the first signal and/or the first signal to the terminal device only when the terminal device supports the first signal.

B. Type of the first signal supported by the terminal device

In a possible example, a standard, a protocol, or a system specifies a type of the first signal, and the terminal device may indicate, in the capability information, whether to support the type of the first signal specified in the standard, the protocol, or the system.

For example, the standard specifies that the type of the first signal is the first signal associated with the control resource set (or the search space, the monitoring occasion, or the PDCCH candidate). The terminal device may carry one bit in the capability information to indicate whether the terminal device supports the first signal associated with the control resource set (or the search space, the monitoring occasion, or the PDCCH candidate). For example, when the bit is 0, it indicates that the terminal device supports the first signal associated with the control resource set, or when the bit is 1, it indicates that the terminal device does not support the first signal associated with the control resource set; or when the bit is 1, it indicates that the terminal device supports the first signal associated with the control resource set, or when the bit is 0, it indicates that the terminal device does not support the first signal associated with the control resource set; or when the capability information carries the bit, it indicates that the terminal device supports the first signal associated with the control

resource set, or when the capability information does not carry the bit, it indicates that the terminal device does not support the first signal associated with the control resource set; or when the capability information does not carry the bit, it indicates that the terminal device supports the first signal associated with the control resource set, or when the capability information carries the bit, it indicates that the terminal device does not support the first signal associated with the control resource set.

In another possible example, the terminal device carries, in the capability information, an identifier of the type of the first signal supported by the terminal device. For example, per CORESET CDS, per Search Space CDS, per Monitoring occasion CDS, and per PDCCH candidate CDS respectively represent a first signal associated with a control resource set, a first signal associated with a search space, a first signal associated with a monitoring occasion, and a first signal associated with a PDCCH candidate.

In another possible example, the terminal device carries a bitmap (bitmap) in the capability information. Each bit of the bitmap corresponds to a type of the first signal, and a value of each bit indicates whether the terminal device supports the type of the first signal corresponding to the bit. For example, the bitmap includes four bits in total, and a 1$^{st}$ bit to a 4$^{th}$ bit respectively correspond to the first signal associated with the control resource set, the first signal associated with the search space, the first signal associated with the monitoring occasion, and the first signal associated with the PDCCH candidate. For example, a value 1 of the bit indicates that the type of the first signal is supported, and a value 0 of the bit indicates that the type of the first signal is not supported, and the bitmap is, for example, "1100", which indicates that types of the first signal supported by the terminal device are the first signal associated with the control resource set and the first signal associated with the search space.

Certainly, the foregoing is merely some examples, and an actual application is not limited thereto.

The terminal device reports the information, so that when sending the first signal to the terminal device, the network device can send the first signal of the type of the first signal supported by the terminal device to the terminal device.

C. Quantity of types of the first signal supported by the terminal device

The terminal device reports the information, so that when sending the first signal to the terminal device, the network device can send the first signal within a range of the quantity of types of the first signal supported by the terminal device. For example, if the terminal device supports two types of the first signal, the network device may send one or two types of first signal to the terminal device.

D. Whether the terminal device supports the first signal associated with the control resource set
E. Whether the terminal device supports the first signal associated with the search space
F. Whether the terminal device supports the first signal associated with the monitoring occasion
G. Whether the terminal device supports the first signal associated with the PDCCH candidate

It may be understood that, for D, E, F, G, and B, only D, E, F, and G may exist, only B may exist, or all of D, E, F, G, and B may exist. When all of D, E, F, G, and B exist, each of D, E, F, and G corresponds to a type of the first signal supported by the terminal device in B. For example, when the type of the first signal supported by the terminal device includes the first signal associated with the control resource set, the terminal device supports, in D, the first signal associated with the control resource set.

H. Quantity of first signals supported by the terminal device

The quantity of first signals supported by the terminal device may be a maximum quantity of first signals that can be received by the terminal device, or a maximum quantity of times that the terminal device can receive the first signal. For example, if the quantity of first signals supported by the terminal device is 3, it indicates that the terminal device receives a maximum of three (or three times of) first signals. In this case, when sending the first signal to the terminal device (or sending the first signal corresponding to the terminal device), the network device sends a maximum of three (or three times of) first signals (it may be understood that the three types of first signals may be the same or different, and this is not limited).

The terminal device reports the information, so that a quantity of first signals sent by the network device is within a reception capability range of the terminal device.

According to the foregoing design, the network device may deliver the configuration parameter of the first signal and send the first signal to the terminal device based on the capability information of the terminal device, so that communication reliability can be improved.

It may be understood that the foregoing embodiments may be separately implemented, or may be implemented in combination with each other. This is not limited.

The method provided in embodiments of this application is described above with reference to the accompanying drawings. The following describes apparatuses provided in embodiments of this application with reference to the accompanying drawings.

Based on a same technical idea, an embodiment of this application provides a communication apparatus 500. The apparatus 500 may be, for example, a satellite, a base station, a terminal, an access point, or a chip inside a satellite, a base station, a terminal, or an access point. The apparatus 500 includes corresponding modules, units, or means (means) for performing the method steps in the foregoing method embodiments. The functions, units, or means may be implemented by software, may be implemented by hardware, or may be implemented by hardware executing corresponding software.

For example, refer to FIG. 5. The apparatus 500 may include a processing module 501 and a transceiver module 502.

Optionally, the transceiver module 502 may include a sending module and/or a receiving module. The sending module is configured to perform the sending operation in the foregoing method embodiment. The receiving module is configured to perform the receiving operation in the foregoing method embodiment.

It needs to be noted that the communication apparatus 500 may include the sending module but does not include the receiving module. Alternatively, the communication apparatus 500 may include the receiving module but does not include the sending module. This may specifically depend on whether the foregoing solution performed by the communication apparatus 500 includes a sending action and a receiving action.

The processing module 501 is configured to perform data processing. The transceiver module 502 may implement a corresponding communication function.

Optionally, the communication apparatus 500 may further include a storage module. The storage module may be configured to store instructions and/or data. The processing module 501 may read the instructions and/or the data in the storage module, to enable the communication apparatus 500 to implement the foregoing method embodiment.

For example, the communication apparatus 500 may be a terminal device or a component that may be disposed in the terminal device. The processing module 501 is configured to perform the processing-related operation on a terminal device side in the foregoing method embodiment. The transceiver module 502 is configured to perform the receiving-related operation on the terminal device side in the foregoing method embodiment.

For example, the transceiver module 502 is configured to receive a configuration message, where the configuration message includes a configuration parameter of a first signal; and the processing module 501 is configured to: control the transceiver module 502 to receive the first signal based on the configuration parameter of the first signal; and if the first signal is successfully received, control the transceiver module 502 to receive a PDCCH associated with the first signal.

For example, the communication apparatus 500 may be a network device or a component that may be disposed in the network device. The processing module 501 is configured to perform the processing-related operation on a network device side in the foregoing method embodiment. The transceiver module 502 is configured to perform the receiving-related operation on the network device side in the foregoing method embodiment.

For example, the transceiver module 502 is configured to: send a configuration message, where the configuration message includes a configuration parameter of a first signal; and send the first signal and a PDCCH associated with the first signal. Optionally, the processing module 501 is configured to generate the configuration message.

It should be understood that all related content of the steps in the foregoing method embodiment may be cited in function description of a corresponding functional module. Details are not described herein again.

The processing module 501 in the foregoing embodiment may be implemented by at least one processor or a processor-related circuit. The transceiver module 502 may be implemented by a transceiver or a transceiver-related circuit. The transceiver module 502 may also be referred to as a communication module or a communication interface.

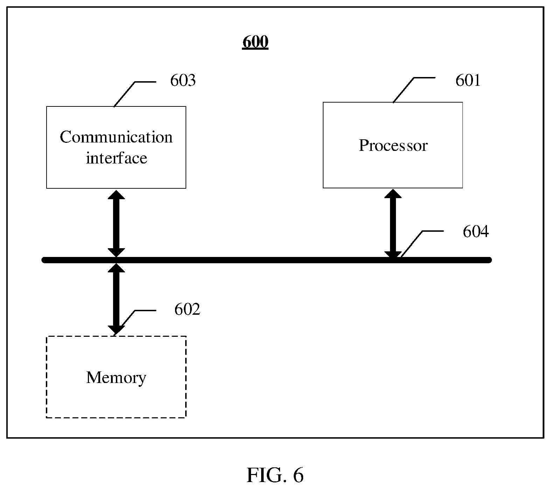

The following describes a diagram of another structure of a communication apparatus according to an embodiment of this application. As shown in FIG. 6, an embodiment of this application further provides a communication apparatus 600, including:

at least one processor 601 and a communication interface 603 that is communicatively connected to the at least one processor 601. The at least one processor 601 executes instructions stored in a memory 602, so that the apparatus is enabled to perform the method steps in the foregoing method embodiment through the communication interface 603.

Optionally, the memory 602 is located outside the apparatus 600.

Optionally, the apparatus 600 includes the memory 602. The memory 602 is connected to the at least one processor 601, and the memory 602 stores instructions that can be executed by the at least one processor 601. In FIG. 6, a dashed line indicates that the memory 602 is optional for the apparatus 600.

The processor 601 and the memory 602 may be coupled through an interface circuit, or may be integrated together. This is not limited herein.

A specific connection medium among the processor 601, the memory 602, and the communication interface 603 is not limited in embodiments of this application. In this embodiment of this application, the processor 601, the memory 602, and the communication interface 603 are connected through a bus 604 in FIG. 6. The bus is represented by using a bold line in FIG. 6. A manner of connection between other components is merely an example for description, and is not limited thereto. The bus may be classified into an address bus, a data bus, a control bus, and the like. For ease of representation,

only one bold line is used for representation in FIG. 6, but this does not mean that there is only one bus or only one type of bus.

A specific connection medium among the processor 601, the memory 602, and the communication interface 603 is not limited in embodiments of this application. In this embodiment of this application, the processor 601, the memory 602, and the communication interface 603 are connected through a bus 604 in FIG. 6. The bus is represented by using a bold line in FIG. 6. A manner of connection between other components is merely an example for description, and is not limited thereto. The bus may be classified into an address bus, a data bus, a control bus, and the like. For ease of representation, only one bold line is used for representation in FIG. 6, but this does not mean that there is only one bus or only one type of bus.

When the communication apparatus 600 is a terminal device, the terminal device may include a processor, a memory, and a transceiver, for example, a terminal device 10 shown in FIG. 3A. The memory may store computer program code, and the transceiver includes a transmitter 1031 and a receiver 1032.

The processor is mainly configured to: process a communication protocol and communication data, control the terminal device, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to receive and send a radio frequency signal in a form of an electromagnetic wave.

When the communication apparatus 600 is a chip in a terminal device, the chip may include a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiment may be understood as an output of the chip, and a receiving operation performed by the terminal device in the foregoing method embodiment may be understood as an input of the chip.

When the communication apparatus 600 is a network device, the network device may include a processor, a memory, and a transceiver, for example, a network device 20 shown in FIG. 3B. The memory may store computer program code, and the transceiver includes a transmitter 2031 and a receiver 2032.

The processor is mainly configured to: process a communication protocol and communication data, control the network device, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to receive and send a radio frequency signal in a form of an electromagnetic wave.

When the communication apparatus 600 is a chip in a network device, the chip may include a processor, a memory, and a transceiver. The transceiver may be an input/output circuit or a communication interface. The processor may be a processing module, a microprocessor, or an integrated circuit integrated on the chip. A sending operation performed by the network device in the foregoing method embodiment may be understood as an output of the chip, and a receiving operation performed by the network device in the foregoing method embodiment may be understood as an input of the chip.

It should be understood that the processor mentioned in embodiments of this application may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a discrete gate or a transistor logic device, a discrete hardware component, or the like. The general-purpose processor may be a microprocessor, or the processor may be any conventional processor, or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, RAMs in many forms may be used, for example, a static random access memory (Static RAM, SRAM), a dynamic random access

memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be noted that the memory described in this specification aims to include but not limited to these memories and any memory of another appropriate type.

Based on a same technical concept, an embodiment of this application further provides a computer-readable storage medium, including a program or instructions. When the program or the instructions are run on a computer, the method in the foregoing method embodiment is performed.

Based on a same technical concept, an embodiment of this application further provides a computer program product, including instructions. When the instructions are run on a computer, the method in the foregoing method embodiment is performed.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

## Claims

**1.** A communication method, comprising:

receiving a configuration message, wherein the configuration message comprises a configuration parameter of a first signal;
receiving the first signal based on the configuration parameter of the first signal; and
if the first signal is successfully received, receiving a physical downlink control channel PDCCH associated with the first signal.

**2.** The method according to claim 1, further comprising:
if the first signal corresponds to a terminal device, determining that the first signal is successfully received.

**3.** The method according to claim 1 or 2, wherein the method further comprises:
if the first signal fails to be received, skipping receiving the PDCCH associated with the first signal, or when PDCCH blind detection is performed, skipping the PDCCH associated with the first signal.

**4.** The method according to claim 3, further comprising:
if the first signal does not correspond to the terminal device, determining that the first signal fails to be received.

**5.** A communication method, comprising:

sending a configuration message, wherein the configuration message comprises a configuration parameter of a first signal; and
sending the first signal and a physical downlink control channel PDCCH associated with the first signal.

**6.** The method according to any one of claims 1 to 4 or the method according to claim 5, wherein the configuration parameter of the first signal comprises one or more of the following:

a first parameter, wherein the first parameter is used to determine to enable or disable the first signal;
a type of the first signal, wherein the type of the first signal comprises one or more of a first signal associated with a control resource set, a first signal associated with a search space, a first signal associated with a monitoring occasion, and a first signal associated with a PDCCH candidate; and
an association relationship between the first signal and one or more of the following resources: a control resource set, a search space, a monitoring occasion, and a PDCCH candidate.

**7.** The method according to claim 6, wherein

the association relationship between the first signal and a control resource set comprises a control resource set associated with the first signal, or a first signal associated with a control resource set; or
the association relationship between the first signal and a search space comprises a search space associated with the first signal, or a first signal associated with a search space; or
the association relationship between the first signal and a monitoring occasion comprises a monitoring occasion associated with the first signal, or a first signal associated with a monitoring occasion; or
the association relationship between the first signal and a PDCCH candidate comprises a PDCCH candidate associated with the first signal, or a first signal associated with a PDCCH candidate.

**8.** The method according to any one of claims 1 to 4, 6, and 7 or the method according to any one of claims 5 to 7, wherein the PDCCH associated with the first signal comprises one or more of the following:

a PDCCH that corresponds to the control resource set associated with the first signal;
a PDCCH that corresponds to the search space associated with the first signal;
a PDCCH that corresponds to the monitoring occasion associated with the first signal; and
a PDCCH that corresponds to the PDCCH candidate associated with the first signal.

**9.** The method according to any one of claims 1 to 4 and 6 to 8, wherein receiving the PDCCH associated with the first signal comprises:
receiving the PDCCH associated with the first signal based on the configuration parameter of the first signal.

**10.** The method according to any one of claims 1 to 4 and 6 to 9, before receiving the configuration message, further comprising:

sending capability information of the terminal device, wherein
the capability information of the terminal device indicates one or more of the following:

whether the terminal device supports PDCCH reception based on the first signal, or whether the terminal device supports the first signal;
a type of the first signal supported by the terminal device;
a quantity of types of the first signal supported by the terminal device;
whether the terminal device supports the first signal associated with the control resource set;
whether the terminal device supports the first signal associated with the search space;
whether the terminal device supports the first signal associated with the monitoring occasion;
whether the terminal device supports the first signal associated with the PDCCH candidate; and
a quantity of first signals supported by the terminal device.

**11.** The method according to any one of claims 5 to 8, before sending the configuration message, further comprising:

receiving capability information of a terminal device, wherein
the capability information of the terminal device indicates one or more of the following:

whether the terminal device supports PDCCH reception based on the first signal, or whether the terminal device supports the first signal;
a type of the first signal supported by the terminal device;
a quantity of types of the first signal supported by the terminal device;
whether the terminal device supports the first signal associated with the control resource set;
whether the terminal device supports the first signal associated with the search space;
whether the terminal device supports the first signal associated with the monitoring occasion;
whether the terminal device supports the first signal associated with the PDCCH candidate; and
a quantity of first signals supported by the terminal device.

**12.** A communication apparatus, comprising a module configured to perform the method according to any one of claims 1 to 4 and 6 to 10, or comprising a module configured to perform the method according to any one of claims 5 to 8 and 11.

**13.** A communication apparatus, comprising a processor and an interface circuit, wherein the interface circuit is electrically coupled to the processor, and the processor performs, by using a logic circuit or executing code instructions, the method according to any one of claims 1 to 4 and 6 to 10 or the method according to any one of claims 5 to 8 and 11.

**14.** A computer-readable storage medium, wherein the storage medium stores a computer program or instructions, and when the computer program or the instructions are run by a computer, the method according to any one of claims 1 to 4 and 6 to 10 or the method according to any one of claims 5 to 8 and 11 is performed.

**15.** A communication system, comprising:

a terminal device, configured to perform the method according to any one of claims 1 to 4 and 6 to 10; and
a network device, configured to perform the method according to any one of claims 5 to 8 and 11.

MO1
MO2
MO3
MO1
MO2
MO3
MO4
CORSET
SS1
SS2
PDCCH candidate
Actual PDCCH

FIG. 1

Network device
Terminal device

FIG. 2

10
Terminal device
101
103
1033
Transceiver
Processor
Transmitter
1031
102
1032
Memory
Computer
program code
Receiver

FIG. 3A

20
Network device
203
201
Transceiver
Processor
Transmitter
2033
2031
202
Memory
2032
Computer
program code
Receiver

FIG. 3B

Network device
Terminal device
S401: The network device sends a configuration message, and the terminal device receives the configuration message
S402: The network device sends a first signal and a PDCCH associated with the first signal
S403: The terminal device receives the first signal based on a configuration parameter of the first signal
Whether the first signal is successfully received
Failed
Successful
S404: Receive the PDCCH associated with the first signal
S405: Skip receiving the PDCCH associated with the first signal

FIG. 4

500
Processing module 501
Transceiver module 502

FIG. 5

600
603
601
Communication interface
Processor
604
602
Memory

FIG. 6

## INTERNATIONAL SEARCH REPORT

International application No.
**PCT/CN2024/137141**

**A. CLASSIFICATION OF SUBJECT MATTER**

H04W 72/0446(2023.01)i; H04W72/04(2023.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT, 3GPP: 配置参数, 配置信息, 配置消息, 高层, 关联, 控制信号, 发现信号, 检测信号, 解调参考信号, 物理下行控制信道, 搜索空间, RRC, control discovery signal, control detection signal, CDS, DMRS, PDCCH, CORESET

**C. DOCUMENTS CONSIDERED TO BE RELEVANT**

| Category* | Citation of document, with indication, where appropriate, of the relevant passages | Relevant to claim No. |
|---|---|---|
| X | CN 115190522 A (DATANG MOBILE COMMUNICATIONS EQUIPMENT CO., LTD.) 14 October 2022 (2022-10-14)<br>description, paragraphs [0135]-[0215] | 1-15 |
| X | CN 112438066 A (GUANGDONG OPPO MOBILE TELECOMMUNICATIONS CORP., LTD.) 02 March 2021 (2021-03-02)<br>description, paragraphs [041]-[0140] | 1-15 |
| A | CN 112020891 A (GUANGDONG OPPO MOBILE TELECOMMUNICATIONS CORP., LTD.) 01 December 2020 (2020-12-01)<br>entire document | 1-15 |
| A | CN 116584059 A (HUAWEI TECHNOLOGIES CO., LTD.) 11 August 2023 (2023-08-11)<br>entire document | 1-15 |
| A | US 2022353710 A1 (NTT DOCOMO INC.) 03 November 2022 (2022-11-03)<br>entire document | 1-15 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **13 February 2025** | **18 February 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/137141**

| Patent document cited in search report | Publication date (day/month/year) | Patent family member(s) | Publication date (day/month/year) |
|---|---|---|---|
| CN 115190522 A | 14 October 2022 | WO 2022206370 A1 | 06 October 2022 |
| CN 112438066 A | 02 March 2021 | WO 2020019188 A1 | 30 January 2020 |
| | | TW 202008816 A | 16 February 2020 |
| | | AU 2018433913 A1 | 04 March 2021 |
| | | IN 202117005163 A | 02 April 2021 |
| | | KR 20210038894 A | 08 April 2021 |
| | | US 2021136772 A1 | 06 May 2021 |
| | | EP 3823377 A1 | 19 May 2021 |
| | | EP 3823377 A4 | 07 July 2021 |
| | | JP 2021536161 W | 23 December 2021 |
| | | JP 7313424 B2 | 24 July 2023 |
| | | TW 813728 B1 | 01 September 2023 |
| | | KR 102599578 B1 | 06 November 2023 |
| | | IN 553590 B | 01 November 2024 |
| CN 112020891 A | 01 December 2020 | WO 2020001123 A1 | 02 January 2020 |
| | | TW 202002695 A | 01 January 2020 |
| | | CN 112020891 B | 01 March 2022 |
| CN 116584059 A | 11 August 2023 | WO 2022116053 A1 | 09 June 2022 |
| US 2022353710 A1 | 03 November 2022 | WO 2020255418 A1 | 24 December 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311766345